# EUROPEAN PATENT APPLICATION

(11) **EP 4 648 180 A1**
(43) Date of publication of application: **12.11.2025**
(21) Application number: 25168520.2
(22) Date of filing: 04.04.2025
(51) Int. Cl.: H01M 10/6554, H01M 10/6556, F28F 3/12, F28F 3/04, H01M 10/613, H01M 10/625, H01M 10/6567, H01M 10/6568, F28D 21/00

(54) **HEAT EXCHANGER**

(30) Priority: 09.05.2024 JP 2024076420; 05.11.2024 JP 2024193893
(71) Applicant: Aisin Corporation, Kariya, Aichi 448-8650 (JP)
(72) Inventor: KOBAYASHI, Shinya, Echizen-shi, 915-8520 (JP); TAKEZAWA, Katsunori, Aichi, 448-8650 (JP); YOSHIDA, Masafumi, Aichi, 448-8650 (JP); KATO, Akiyoshi, Echizen-shi, 915-8520 (JP); TANAKA, Shimpei, Aichi, 448-8650 (JP); FUKUOKA, Ryohei, Echizen-shi, 915-8520 (JP)
(74) Representative: TBK

(57) **Abstract**

A heat exchanger (A), through which a fluid to be heat-exchanged with a battery mounted on a vehicle flows, includes: a plurality of heat exchange modules (1) each having a heat exchange flow path formed inside by overlapping and joining a plurality of metal plates, a supply port through which the fluid is sent to the heat exchange flow path, and a discharge port through which the fluid is sent out from the heat exchange flow path; a supply flow path module (2) joined to each of the plurality of heat exchange modules and configured to supply the fluid from the supply port of each of the plurality of heat exchange modules; and a discharge flow path module (3) joined to each of the plurality of heat exchange modules and configured to discharge the fluid from the discharge port of each of the plurality of heat exchange modules. In at least one of the supply flow path module and the discharge flow path module, a flow path through which the fluid flows is formed inside by overlapping and joining a plurality of metal plates.

## Description

### TECHNICAL FIELD

This disclosure relates to a heat exchanger.

### BACKGROUND DISCUSSION

The specification of Chinese Patent No. 207303288 (Reference 1) discloses, as a heat exchanger (100), a power battery heat management system in which cooling pipes (102) are connected to both ends in a longitudinal direction of a plurality of water cooling panels (101) arranged side by side, and heat exchange is performed by supplying and discharging water to and from these cooling pipes (102).

In Reference 1, water is supplied and discharged by connecting a water intake pipe (200) and an outlet pipe (300) to a pair of cooling pipes (102) via a joint (402), a three-way valve (400), a rubber pipe (401), or the like.

For example, in a battery electric vehicle (BEV), since a battery arranged on a lower side of a floor is accommodated in a small arrangement space in an up-down direction, a heat exchanger for cooling the battery is also desired to be thin.

On the other hand, in the heat exchanger described in Reference 1, the tubular cooling pipes (102) are connected to both the ends of the plurality of water cooling panels (101) arranged in parallel, and the water intake pipe (200) and the outlet pipe (300) are connected to connectors (105) connected to both ends of the cooling pipes (102) via the joint (402), the three-way valve (400), the rubber pipe (401), or the like. Therefore, a dimension of the heat exchanger in the up-down direction is increased, which not only increases the number of components but also complicates an assembly process.

The plurality of water cooling panels (101) disclosed in Reference 1 have a common structure and thus can reduce the arrangement space, but since the cooling pipes (102) connected to both the ends of the plurality of water cooling panels (101) have a pipe shape having an outer diameter larger than a thickness of the water cooling panel (101), it is difficult to reduce the arrangement space.

A need thus exists for a heat exchanger that can be arranged in a small arrangement space in the up-down direction and can be easily assembled.

### SUMMARY

A heat exchanger according to this disclosure is a heat exchanger through which a fluid to be heat-exchanged with a battery mounted on a vehicle flows. The heat exchanger includes: a plurality of heat exchange modules each having a heat exchange flow path formed inside by overlapping and joining a plurality of metal plates, a supply port through which the fluid is sent to the heat exchange flow path, and a discharge port through which the fluid is sent out from the heat exchange flow path; a supply flow path module joined to each of the plurality of heat exchange modules and configured to supply the fluid from the supply port of each of the plurality of heat exchange modules; and a discharge flow path module joined to each of the plurality of heat exchange modules and configured to discharge the fluid from the discharge port of each of the plurality of heat exchange modules. In at least one of the supply flow path module and the discharge flow path module, a flow path through which the fluid flows is formed inside by overlapping and joining a plurality of metal plates.

According to this configuration, the fluid supplied from the supply flow path module flows to the plurality of heat exchange modules and is discharged from the discharge flow path module. When the fluid flows in this manner, a temperature of the battery is adjusted by heat exchange between the battery and the fluid in the heat exchange module. In this heat exchanger, the supply flow path module and the heat exchange module are joined to enable supply of the fluid, and the heat exchange module and the discharge flow path module are joined to enable the discharge of the fluid. Therefore, for example, compared to a case where the fluid is supplied and discharged using a connector and a pipe, a dimension in an up-down direction can be shortened, a space can be saved, the number of components can be reduced, and an assembly process can be simplified. Therefore, the heat exchanger that can be arranged in a small arrangement space in the up-down direction and can be easily assembled is implemented. Further, as the supply flow path module or the discharge flow path module, for example, an upper metal plate having an arc-shaped cross section that protrudes upward and a lower metal plate processed to have a circular cross section that protrudes downward can be joined by a technique such as welding to form a channel. In the channel configured by vertically overlapping the metal plates in this manner, for example, it is easy to form a flow path having a flow path cross section compressed in the up-down direction, and a dimension of the entire heat exchanger A in the up-down direction can be shortened.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a heat exchanger;
Fig. 2 is a plan view showing a flow of a coolant in a heat exchange module;
Fig. 3 is a cross-sectional view taken along a line III-III in Fig. 2;
Fig. 4 is a cross-sectional view taken along a line IV-IV in Fig. 2;
Fig. 5 is a cross-sectional view taken along a line V-V in Fig. 2;
Fig. 6 is a cross-sectional view taken along a line VI-VI in Fig. 2;
Fig. 7 is an enlarged cross-sectional view of a heat exchange module according to another embodiment (f);
Fig. 8 is an enlarged perspective view of the heat exchange module according to another embodiment (f);
Fig. 9 is a plan view of a part of a heat exchange module according to another embodiment (g);
Fig. 10 is a cross-sectional view taken along a line X-X in Fig. 9;
Fig. 11 is a cross-sectional view taken along a line XI-XI in Fig. 9;
Fig. 12 is a cross-sectional view taken along a line XII-XII in Fig. 9;
Fig. 13 is a cross-sectional view taken along a line XIII-XIII in Fig. 9;
Fig. 14 is a cross-sectional view taken along a line XIV-XIV in Fig. 9; and
Fig. 15 is a cross-sectional view taken along a line XV-XV in Fig. 9.

### DETAILED DESCRIPTION

Hereinafter, a heat exchanger according to an embodiment disclosed here will be described with reference to the drawings. In the embodiment, as an example of a heat exchanger A, a heat exchanger that manages a temperature of a battery B of a vehicle V is described. This disclosure is not limited to the following embodiments, and various modifications can be made without departing from the gist of this disclosure.

Hereinafter, embodiments disclosed here will be described with reference to the drawings.

### Basic Configuration

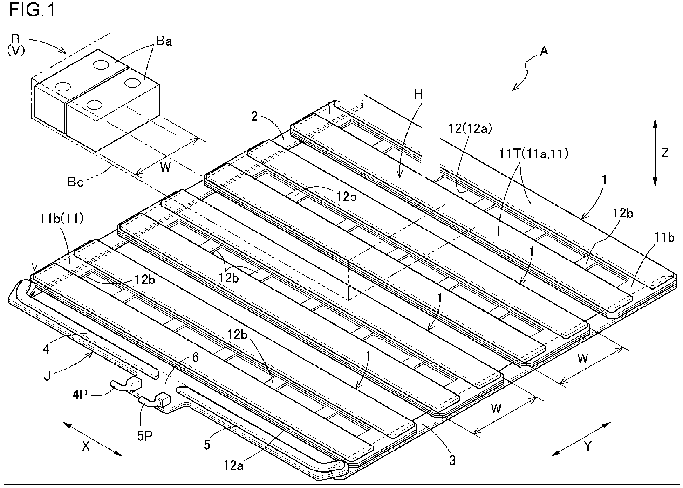

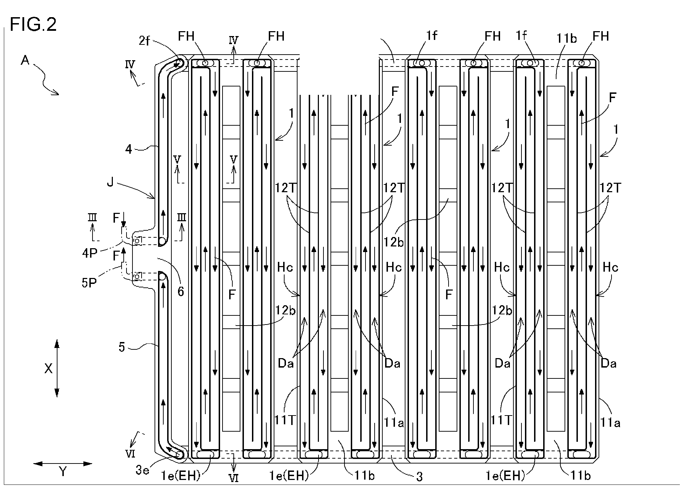

As shown in Figs. 1 and 2, the heat exchanger A includes a plurality of (four in the embodiment) heat exchange modules 1, a single supply flow path module 2, a single discharge flow path module 3, a supply passage 4, and a discharge passage 5. The supply passage 4 and the discharge passage 5 are configured as a connection module J integrated in a form in which a holding bracket 6 is arranged at a center.

The connection module J includes a supply port 4P through which a coolant F (an example of a fluid) is supplied to an upstream end portion of the supply passage 4, and a discharge port 5P through which the coolant F (fluid) is discharged from a downstream end portion of the discharge passage 5. The coolant F is composed of cooling water such as a long-life coolant (LLC) or insulating oil such as paraffinic oil. The fluid may be a refrigerant such as hydrofluorocarbon (HFC) or hydrofluoroolefin (HFO).

In the embodiment, the heat exchanger A is arranged at a bottom portion of a battery storage space below a floor in a battery electric vehicle (BEV). As shown in Fig. 1, the battery B accommodates a plurality of battery cells Ba in an aligned state inside a case Bc. By arranging the battery B, in which the plurality of battery cells Ba are accommodated in the case Bc in this manner, in the battery storage space, a temperature of the plurality of battery cells Ba is adjusted by the coolant F (fluid) flowing through the heat exchange modules 1.

In the embodiment, the heat exchanger A is arranged in a posture shown in Fig. 1. From such a position relationship, an up-down shown in the drawing is referred to as an up-down direction Z, a longitudinal direction of the heat exchange modules 1 is referred to as a longitudinal direction X, and a direction in which the heat exchange modules 1 are arranged in parallel is referred to as a parallel direction Y.

The heat exchange modules 1, the supply flow path module 2, the discharge flow path module 3, the supply passage 4, and the discharge passage 5 are formed using a metal material having high thermal conductivity such as aluminum. In the heat exchanger A, the supply flow path module 2 and the discharge flow path module 3 are joined to the heat exchange modules 1 by welding in a state where the coolant F (fluid) can flow.

Similarly, the supply passage 4 is joined to the supply flow path module 2 by welding in a state where the coolant F (fluid) can flow, and the discharge passage 5 is joined to the discharge flow path module 3 by welding in a state where the coolant F (fluid) can flow.

The coolant F (fluid) flows through the supply port 4P, the supply passage 4, the supply flow path module 2, the plurality of heat exchange modules 1, the discharge flow path module 3, and the discharge passage 5 in this order, and is discharged to the outside from the discharge port 5P. The heat exchanger A is supplied with the low-temperature coolant F when heat dissipation of the battery B is required. When the temperature of the battery B is decreased, the coolant F whose temperature has been increased is supplied to the heat exchanger A.

### Heat Exchange Module

As shown in Figs. 1 and 2, in the heat exchanger A, the plurality of (four in the embodiment) heat exchange modules 1 having the same shape are arranged at set intervals along the parallel direction Y. Each heat exchange module 1 includes a pair of heat exchange portions Hc having a band shape in a plan view in a parallel posture, and each heat exchange portion Hc is formed with a heat exchange flow path Da through which the coolant F flows.

As shown in Fig. 2, in each of the plurality of heat exchange modules 1, a supply port 1f is formed at one end portion in the longitudinal direction X, and a discharge port 1e is formed at the other end portion, and the supply port 1f and the discharge port 1e communicate with the heat exchange flow path Da of the heat exchange portion Hc.

As shown in Fig. 1, a width of the battery cell Ba is in a dimension relationship substantially equal to a heat exchange portion width W of outer ends of the pair of heat exchange portions Hc. In the battery cell Ba, electrodes (positive and negative electrodes) are arranged in the vicinity of both ends in a width direction, and since heat generation in regions close to the respective electrodes is large during charging and discharging, the pair of heat exchange portions Hc are arranged in the vicinity of bottom surfaces of the pair of electrodes of the battery cell Ba so as to efficiently dissipate the heat generation.

As shown in Figs. 1 to 6, the heat exchange module 1 is formed by arranging a heat exchange upper plate 11 (an example of a heat exchange wall) and a heat exchange lower plate 12 (a bottom wall), each of which is formed by pressing an aluminum plate material, at positions facing each other and joining the heat exchange upper plate 11 and the heat exchange lower plate 12 by welding. Accordingly, the heat exchange flow path Da through which the coolant F can flow is formed in a region from the supply port 1f to the discharge port 1e.

In the heat exchange upper plate 11 (heat exchange wall), a pair of upper plates 11a arranged in the parallel direction Y corresponding to the pair of heat exchange portions Hc and an upper end portion plate 11b connecting both end portions of the pair of upper plates 11a in the longitudinal direction X are integrally formed.

In the heat exchange lower plate 12 (bottom wall), a pair of lower plates 12a arranged in the parallel direction Y corresponding to the pair of heat exchange portions Hc in the plan view, and a lower connection plate 12b connecting both ends of the pair of lower plates 12a in the longitudinal direction X and a plurality of intermediate parts in the longitudinal direction X are integrally formed.

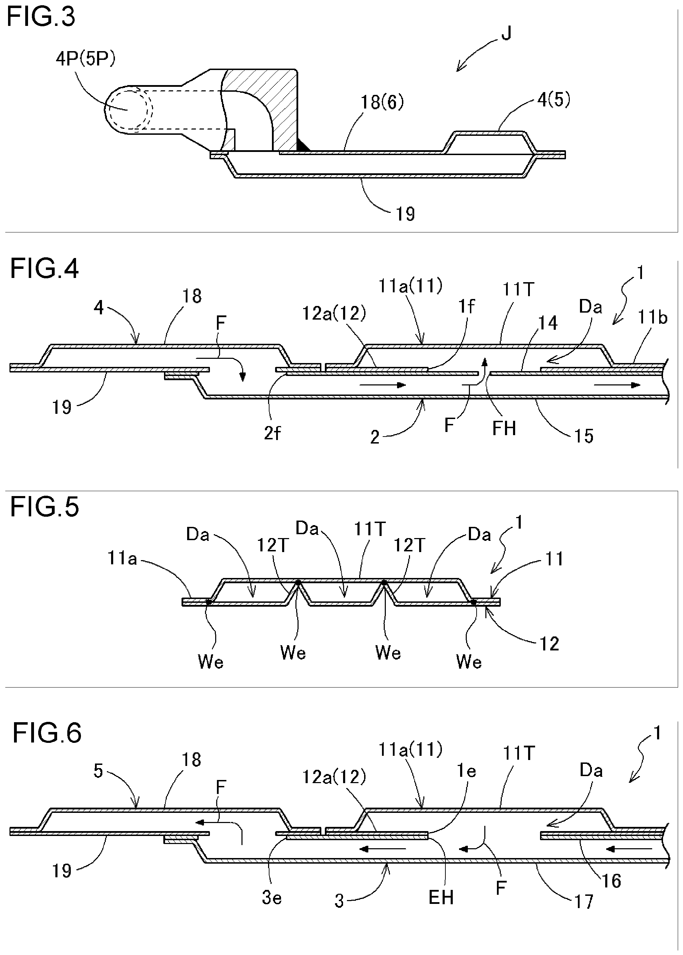

As shown in Figs. 4 and 5, the upper plate 11a is formed with a bulging portion 11T protruding upward. The lower plate 12a is arranged at a position covering a lower side of the upper plate 11a, and protrusion portions 12T protruding upward are formed at a plurality of portions in the parallel direction Y. As shown in Fig. 2, the protrusion portion 12T is formed along the longitudinal direction X of the lower plate 12a, and forms the heat exchange flow path Da between the upper plate 11a and the lower plate 12a.

As shown in Figs. 2, 4 and 6, the lower plate 12a is formed with the supply port 1f and the discharge port 1e at the both ends in the longitudinal direction X.

From such a configuration, as shown in Fig. 5, an internal space of the heat exchange module 1 is partitioned by joining abutting parts of the upper plate 11a and the lower plate 12a by welding, and the heat exchange flow path Da is formed. In these drawings, the parts where the plates abut against each other are joined by welding, but welded portions We are shown only in Fig. 5.

As shown in Fig. 2, in the heat exchange flow path Da, the coolant F supplied from the supply port 1f is folded back toward the supply port 1f in the vicinity of the discharge port 1e in the plan view. The coolant F folded back in this manner further flows toward the discharge port 1e in the vicinity of the supply port 1f, and is discharged from the discharge port 1e. By setting a flow path shape of the heat exchange flow path Da in this manner, the coolant F flows at a distance longer than a distance linearly connecting the supply port 1f and the discharge port 1e, and heat exchange without waste is implemented.

The flow path shape of the heat exchange flow path Da may be set such that the coolant F flows in a zigzag manner in the plan view or the coolant F branches and flows through a plurality of parallel flow paths.

### Supply Flow Path Module

As shown in Fig. 4, in the supply flow path modules 2, a supply side upper plate 14 and a supply side lower plate 15, which are formed by pressing aluminum plate materials, are joined by welding. The supply flow path module 2 formed by this joining has a structure in which an introduction portion 2f is formed at one end portion of the supply side upper plate 14 in the parallel direction Y, a flow path space through which the coolant F supplied from the introduction portion 2f flows is formed, and the other end portion of the supply side upper plate 14 in the parallel direction Y is closed.

A cross-sectional shape of the supply flow path module 2 is set to a non-circular shape such as a rectangle in which a dimension in a horizontal direction is larger than a dimension in a vertical direction or an ellipse compressed in the up-down direction, thereby limiting an increase in a dimension in the up-down direction Z.

A plurality of communication holes FH are formed in the supply side upper plate 14. In a state where the communication hole FH is arranged at a position overlapping the supply port 1f of the heat exchange module 1, an upper surface of the supply side upper plate 14 is joined to a bottom surface of the lower plate 12a of the heat exchange module 1 by welding.

Accordingly, the supply flow path module 2 can supply the flowing coolant F from the communication hole FH to the heat exchange flow path Da via the supply port 1f. As shown in Figs. 2 and 4, an opening cross-sectional area of the supply port 1f is set to be larger than a flow path cross-sectional area of the communication hole FH.

### Discharge Flow Path Module

As shown in Fig. 6, in the discharge flow path modules 3, a discharge side upper plate 16 and a discharge side lower plate 17, which are formed by pressing aluminum plate materials, are joined by welding. The discharge flow path module 3 formed by this joining has a structure in which a discharge portion 3e is formed at one end portion of the discharge side upper plate 16 in the parallel direction, a flow path space through which the coolant F flows to the discharge portion 3e is formed, and the other end portion of the discharge side upper plate 16 in the parallel direction is closed.

Similarly to the supply flow path module 2 described above, a cross-sectional shape of the discharge flow path module 3 is set to a non-circular shape such as a rectangle in which a dimension in the horizontal direction is larger than a dimension in the vertical direction or an ellipse compressed in the up-down direction, thereby limiting an increase in a dimension in the up-down direction Z.

A plurality of discharge side openings EH are formed in the discharge side upper plate 16. In a state where the discharge side opening EH is arranged at a position overlapping the discharge port 1e of the heat exchange module 1, an upper surface of the discharge side upper plate 16 is joined to the bottom surface of the lower plate 12a of the heat exchange module 1 by welding.

Accordingly, the discharge flow path module 3 is configured to allow the coolant F discharged from the discharge port 1e of the heat exchange module 1 to flow to the discharge side opening EH via the discharge port 1e and to be discharged to the discharge flow path module 3.

### Supply Passage/Discharge Passage

As shown in Figs. 3, 4, and 6, the supply passage 4 is joined by welding such that one end portion of the supply passage 4 communicates with the introduction portion 2f of the supply flow path module 2. The discharge passage 5 is joined by welding such that one end portion of the discharge passage 5 communicates with the discharge portion 3e of the discharge flow path module 3.

Each of the supply passage 4 and the discharge passage 5 forms a coaxial flow path along the longitudinal direction X by welding a single upper supply and discharge plate 18 and a single lower supply and discharge plate 19 which are formed by pressing aluminum plate materials.

The holding bracket 6 is formed as a region in which an upper bracket portion formed integrally with the upper supply and discharge plate 18 and a lower bracket portion formed on the lower supply and discharge plate 19 are integrated by welding. The supply port 4P and the discharge port 5P are provided for the holding bracket 6 formed in this manner.

### Operational Effects of Embodiment

As described above, the heat exchanger A has a configuration in which the pressed aluminum plate materials of the heat exchange module 1 are overlapped and joined by welding. Therefore, for example, compared to the heat exchange module 1 in which the heat exchange flow path Da is formed using a metal pipe, it is not necessary to increase a diameter of the metal pipe in order to increase a flow rate of the coolant F (fluid).

Accordingly, this prevents an increase in a height and size of the heat exchanger A in order to enhance a heat conversion performance. In the heat exchanger A, each of the supply flow path module 2 and the discharge flow path module 3 can be set to have a non-circular cross-sectional shape such as a rectangle in which the dimension in the horizontal direction is larger than the dimension in the vertical direction or an ellipse compressed in the up-down direction by welding the pressed aluminum plate materials, and an increase in the dimension in the up-down direction Z is limited.

Further, in the heat exchanger A, since the heat exchange module 1 and the supply flow path module 2 are joined by welding and the heat exchange module 1 and the discharge flow path module 3 are joined by welding, it is not necessary to use a connector, a hose, or the like for delivering the coolant F, and it is possible to reduce the dimension in the up-down direction and to reduce the number of components.

In particular, since the heat exchanger A can use a configuration common to the plurality of heat exchange modules 1, the number of heat exchange modules 1 can be set according to a size of a cooling target, and versatility can be improved.

### Other Embodiments

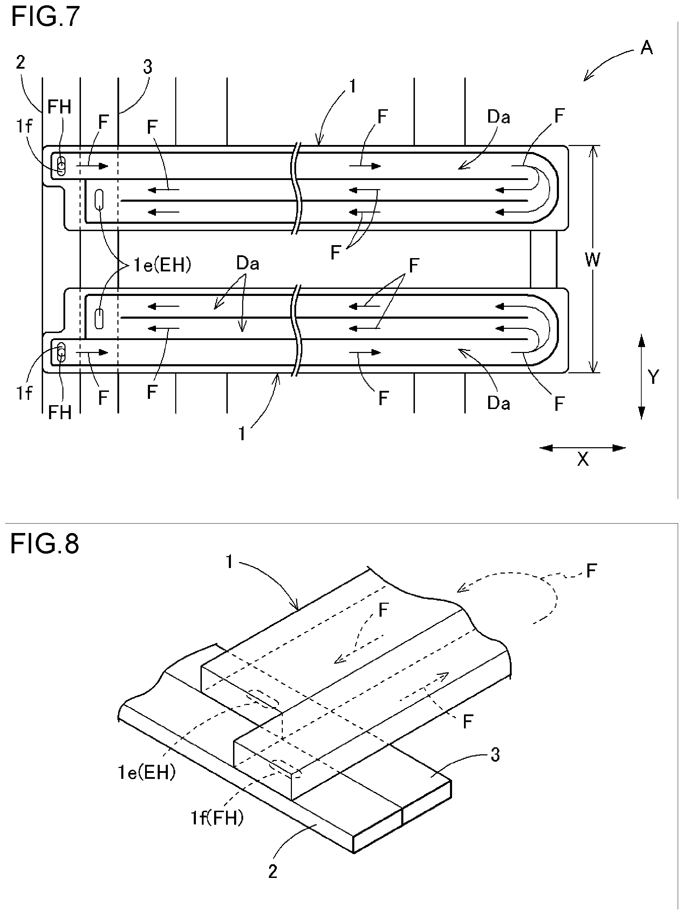

In addition to the above embodiment, this disclosure may be implemented as follows (those having the same functions as the embodiment are denoted by the same reference numerals as in the embodiment).
(a) In the above embodiment, the heat exchange module 1 is formed by the pair of heat exchange portions Hc, but instead of this, the heat exchange module 1 can be formed by a single heat exchange portion Hc, or the heat exchange module 1 can be formed by three or more heat exchange portions Hc.
(b) At least one of the supply flow path module 2 and the discharge flow path module 3 is formed of a hose or a pipe material. That is, by using a hose or a pipe material at a part away from the supply flow path module 2 in the parallel direction Y, it is possible to use a commercially available hose or the like as a ready-made product while limiting an increase in the dimension in the up-down direction Z.
(c) By connecting spaces at the end portions having the supply ports 1f of the heat exchange modules 1 at adjacent positions, the supply flow path module 2 is configured such that the coolant F flows therebetween. The supply flow path module 2 having this configuration has a structure in which a space of a part of the heat exchange module 1 is also used to the supply flow path module 2 and the supply side upper plate 14 is omitted, but a material forming the supply flow path module 2 is reduced, a weight can be reduced, and the dimension of the heat exchanger A in the up-down direction can be reduced.
(d) By connecting spaces at the end portions having the discharge ports 1e of the heat exchange modules 1 at adjacent positions, the discharge flow path module 3 is configured such that the coolant F flows therebetween. The discharge flow path module 3 having this configuration has a structure in which a space of a part of the heat exchange module 1 is also used to the discharge flow path module 3 and the discharge side upper plate 16 is omitted, but a material forming the discharge flow path module 3 is reduced, a weight can be reduced, and the dimension of the heat exchanger A in the up-down direction can be reduced.
(e) Although the aluminum plate material is used in the above embodiment, it is also possible to use, for example, a copper alloy and join the copper alloy by brazing such as soldering. In the above embodiment, a pair of aluminum plate materials are joined by welding, but the pair of aluminum plate materials may be joined by fusing, bonding, or the like.
(f) As shown in Figs. 7 and 8, in the heat exchanger A, the supply flow path module 2 and the discharge flow path module 3 are arranged adjacent to each other on one side in the longitudinal direction X, and the plurality of heat exchange modules 1 in which the supply ports 1f and the discharge ports 1e are formed at the same end portions in the longitudinal direction X are arranged at predetermined intervals along the parallel direction Y. Although Fig. 7 shows only the pair of heat exchange modules 1 of the heat exchanger A, about eight heat exchange modules 1 are provided as in the embodiment. The heat exchange module 1 is arranged such that only one end portion thereof overlaps the upper surfaces of the end portions of the supply flow path module 2 and the discharge flow path module 3.

The supply flow path module 2 and the discharge flow path module 3 each form a flow path space therein by press-forming an upper plate and a lower plate made of an aluminum plate material and joining the upper plate and the lower plate by welding, similarly to the embodiment described above.

Similarly, in the heat exchange module 1, an upper plate and a lower plate made of an aluminum plate material are press-formed and joined to each other by welding to form a flow path space therein. The heat exchange flow path Da is formed in the flow path space.

In another embodiment (f), the communication holes FH are formed in the upper plate of the supply flow path module 2, and the discharge side openings EH having a hole shape are formed in the upper plate of the discharge flow path module 3. Correspondingly, in the heat exchange module 1, the supply ports 1f are formed at positions overlapping the communication holes FH, and the discharge ports 1e are formed at positions overlapping the discharge side openings EH.

The heat exchange module 1 has a structure in which the supply port 1f and the discharge port 1e are arranged at one end portion in the longitudinal direction X, and the coolant F (fluid) supplied from the supply port 1f is reversed into a U-shape at the other end portion. Since the supply flow path module 2 and the discharge flow path module 3 are arranged adjacent to each other, the supply port 1f and the discharge port 1e are arranged at different positions in the longitudinal direction X.

Similarly to the embodiment, the supply flow path module 2 and the discharge flow path module 3 are joined to the heat exchange module 1 by welding in a state where the coolant F (fluid) can flow by welding. As shown in Fig. 7, the pair of heat exchange modules 1 has a shape in which the front and back are reversed, and the heat exchange modules 1 having the same shape can be used.

In another embodiment (f), in each of the plurality of heat exchange modules 1, since the coolant F (fluid) is reversed and flows in a U-shape, a temperature of the heat exchange module 1 in the longitudinal direction is averaged, and the battery B arranged at any position in the longitudinal direction X can be cooled without a temperature difference. In another embodiment (f), there is a configuration in which the coolant F flows through the single heat exchange flow path Da from the communication hole FH and the coolant F flows through the two heat exchange flow paths Da after being reversed into a U-shape, but the number of the heat exchange flow paths Da may be any number.

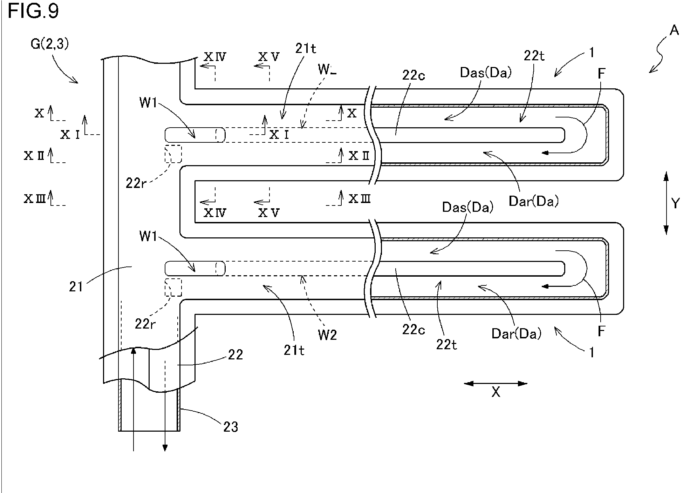

(g) As shown in Figs. 9 to 13, a first plate 21, a second plate 22, and a third plate 23, each of which is pressed, are overlapped in the up-down direction Z, and respective flange portions are joined by welding to form the heat exchanger A in which the supply flow path module 2, the discharge flow path module 3, and the plurality of heat exchange modules 1 are integrally formed.

In the heat exchanger A, a plurality of batteries (not shown) are placed on the upper surfaces of the plurality of heat exchange modules 1, and the coolant F (fluid) is supplied to the heat exchange modules 1 to adjust temperatures of the plurality of batteries.

A metal material (metal plate) having high thermal conductivity such as aluminum is used for the first plate 21, the second plate 22, and the third plate 23. In the heat exchanger A, for example, a copper alloy may be used and the copper alloy is joined to the first plate 21, the second plate 22, and the third plate 23 by brazing such as soldering.

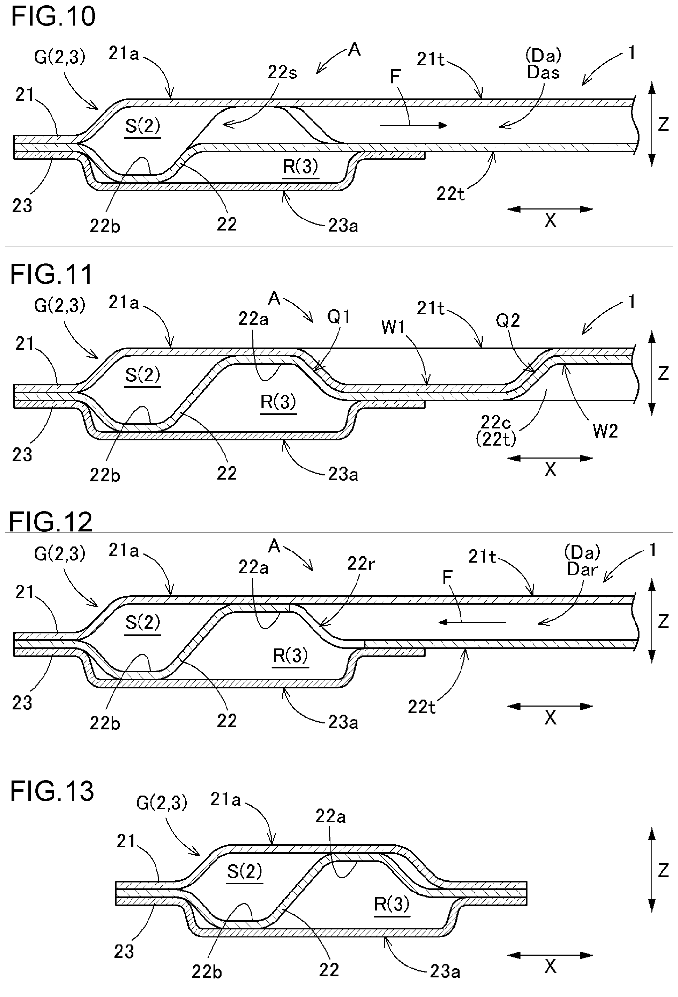

In another embodiment (g), as shown in Figs. 10 to 13, a tubular space formed by the first plate 21 and the third plate 23 is partitioned by the second plate 22, so that a flow path portion G having a tubular shape as a whole is formed in a position relationship in which the supply flow path module 2 and the discharge flow path module 3 are adjacent to each other. In the flow path portion G, the second plate 22 functions as a partition wall, and a supply side flow path S forming the supply flow path module 2 and a discharge side flow path R forming the discharge flow path module 3 are arranged at positions sandwiching the second plate 22.

The first plate 21 includes an upper bulging portion 21a bulging upward, and the third plate 23 includes a lower bulging portion 23a bulging downward. The first plate 21, the second plate 22, and the third plate 23 are overlapped and joined by welding in a state where flange portions of the first plate 21, the second plate 22, and the third plate 23 are overlapped to form the flow path portion G having a tubular shape as a whole.

A part of the second plate 22 is an upper protrusion portion 22a that protrudes upward and the other part of the second plate 22 is a lower protrusion portion 22b that protrudes downward. The upper protrusion portion 22a is joined to an inner surface of the upper bulging portion 21a by welding in a close contact state, and the lower protrusion portion 22b is joined to an inner surface of the lower bulging portion 23a by welding in a close contact state, thereby forming the supply side flow path S and the discharge side flow path R.

The flow path portion G may have a configuration in which the upper protrusion portion 22a is in close contact with the inner surface without being welded to the upper bulging portion 21a, and the lower protrusion portion 22b is in close contact with the inner surface of the lower bulging portion 23a without being welded thereto. It is also conceivable to bond and fix close contact portions with an adhesive.

As shown in Fig. 9, the heat exchange module 1 is integrally formed with the flow path portion G, and extends in a direction (longitudinal direction X) orthogonal to a direction (parallel direction Y) in which the coolant F (fluid) flows.

In the heat exchange module 1, as shown in Figs. 9, 10, and 12, the heat exchange flow path Da is formed between a first extending portion 21t linearly extending along the longitudinal direction X on an upper surface of the upper bulging portion 21a of the first plate 21 and a second extending portion 22t extending along the longitudinal direction X on a part of the second plate 22. A height of the second extending portion 22t in the up-down direction Z is set so as to linearly extend from the middle of the flow path portion G in the up-down direction Z in the second plate 22.

The heat exchange flow path Da includes a going flow path Das to which the coolant F (fluid) is supplied from the supply side flow path S, and a returning flow path Dar through which the coolant F (fluid) whose flow is reversed in a U-shape at a protrusion end of the heat exchange module 1 returns to the discharge side flow path R.

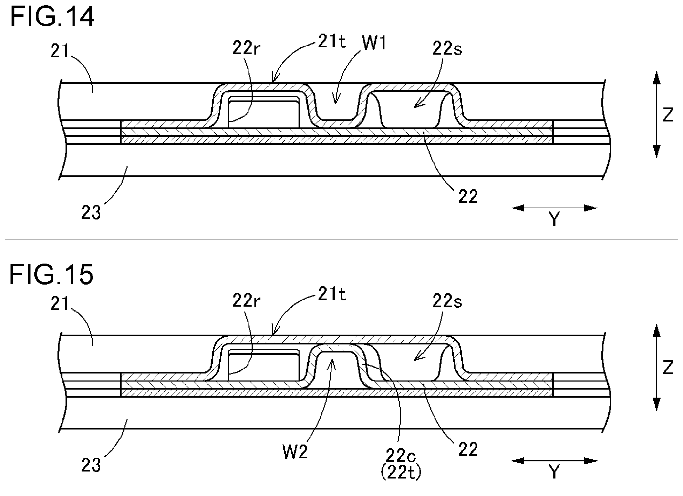

As shown in Figs. 9, 11, and 15, the second extending portion 22t includes a partition wall 22c that protrudes upward such that a protrusion end thereof is in close contact with an inner wall (lower surface) of the first extending portion 21t. By forming the partition wall 22c, the going flow path Das and the returning flow path Dar are formed in a form in which a space between the first extending portion 21t and the second extending portion 22t is divided into two in the parallel direction Y. A configuration of the partition wall 22c will be described later.

As shown in Fig. 9, the heat exchange module 1 has a smooth curved surface that guides the coolant F (fluid) flowing through the going flow path Das to the returning flow path Dar between the first extending portion 21t and the second extending portion 22t at an extending end.

As shown in Figs. 10, 14, and 15, the second plate 22 forms a supply portion 22s (supply port) on a lower side of a lower surface of the upper bulging portion 21a by recessing the upper protrusion portion 22a in a region corresponding to the going flow path Das downward. Accordingly, the heat exchanger A sends a part of the coolant F (fluid) flowing through the supply side flow path S from the supply portion 22s (supply port) to the going flow path Das.

As shown in Figs. 12, 14, and 15, the second plate 22 forms an opening 22r (discharge port) in a part of the upper protrusion portion 22a corresponding to the returning flow path Dar in the direction along the parallel direction Y. Accordingly, the heat exchanger A returns the coolant F (fluid) flowing to the returning flow path Dar from the opening 22r (discharge port) to the discharge side flow path R.

As shown in Figs. 9, 11, and 14, in the heat exchange module 1, a region of the first extending portion 21t close to the flow path portion G is recessed downward by drawing at a boundary between the supply portion 22s and the opening 22r in the plan view to form a first recess W1. The first recess W1 is formed by a part of the first extending portion 21t protruding downward, and the protrusion end (lower end portion) is joined to the second extending portion 22t by welding.

As shown in Fig. 11, a part of the protrusion portion formed by the first recess W1 is in close contact with an outer surface of a region in an oblique posture continuous with an outer surface of the upper protrusion portion 22a at a boundary position between the supply portion 22s and the opening 22r to create a first seal portion Q1.

That is, the first seal portion Q1 has a configuration in which an inclined region at one end of the protrusion portion formed by the first recess W1 in the longitudinal direction X is in close contact with a region in an inclined posture of the outer surface of the upper protrusion portion 22a of the second plate 22 without a gap. With this configuration, the first seal portion Q1 prevents the coolant F (fluid) from flowing from the supply side flow path S to the opening 22r in a short circuit manner.

As shown in Fig. 11, in the heat exchange module 1, a region of the second extending portion 22t that is continuous with the first recess W1 in the longitudinal direction X is recessed upward by drawing at the boundary position between the supply portion 22s and the opening 22r in the plan view to form a second recess W2. The second recess W2 is formed by a part of the second extending portion 22t protruding upward, and the protrusion end (upper end portion) is joined to the first extending portion 21t by welding.

As shown in Fig. 11, the other end of the protrusion portion formed by the first recess W1 in the longitudinal direction X is formed in an inclined posture as shown in the same drawing. A region in the inclined posture of the protrusion portion formed by the second recess W2 is in close contact with the region in the inclined posture to create a second seal portion Q2. In particular, the protrusion portion formed by the second recess W2 functions as the partition wall 22c.

That is, the second seal portion Q2 has a configuration in which the region in the inclined posture of the protrusion portion formed by the first recess W1 and the region in the inclined posture of the protrusion portion formed by the second recess W2 are in close contact with each other without a gap. The protrusion end (upper end portion) of the protrusion portion formed by the second recess W2 is in close contact with the first extending portion 21t.

With this configuration, in the second recess W2, in a region continuous in the direction along the longitudinal direction X with the protrusion portion formed by the first recess W1, the second seal portion Q2 prevents leakage of the coolant F (fluid) between the protrusion portion of the first recess W1 and the protrusion portion of the second recess W2. At the same time, the protrusion portion of the second recess W2 functioning as the partition wall 22c prevents the leakage of the coolant F (fluid) between the going flow path Das and the returning flow path Dar.

Although not shown in the drawings, the heat exchange module 1 according to another embodiment (g) includes a supply side port through which the coolant F (fluid) is supplied to the supply side flow path S and a discharge side port through which the coolant F (fluid) from the discharge side flow path R is discharged.

With such a configuration, the heat exchanger A supplies the coolant F (fluid) from the supply side port to the supply side flow path S to cause the coolant F (fluid) to flow through the going flow paths Das of the plurality of heat exchange modules 1. Further, the heat exchanger A returns the coolant F (fluid) to the discharge side flow path R via the returning flow path Dar and discharges the coolant F from the discharge side port.

The heat exchanger A configured as described above can be manufactured by overlapping the first plate 21, the second plate 22, and the third plate 23, each of which is pressed, and joining the plates by welding.

In the heat exchanger A, since the partition wall 22c is integrally formed inside the heat exchange module 1, it is possible to separate the going flow path Das and the returning flow path Dar without increasing the number of components, for example, as compared with a case where a partition structure is formed using a separate member. In this configuration, the number of manufacturing steps is reduced as compared with a configuration in which a plurality of components are assembled.

In the heat exchanger A, for example, as compared with a configuration in which a plurality of components are connected to form a flow path, for example, when the coolant F (fluid) flows from the supply side flow path S to the going flow path Das, the coolant F (fluid) passes through the supply portion 22s, but a flow path resistance is small because the supply portion 22s is a simple opening. Similarly, when the coolant F (fluid) flows from the returning flow path Dar to the discharge side flow path R, the coolant F (fluid) passes through the opening 22r, but the flow path resistance is small because the opening 22r is formed in a hole shape in the second plate 22.

Since the flow path resistance is reduced in this manner, a pressure loss is reduced as compared with a configuration in which a plurality of components are connected to form a flow path, and a sufficient amount of the coolant F (fluid) is supplied to the plurality of heat exchange modules 1 without increasing a pressure of the coolant F (fluid) supplied to the supply side flow path S.

### Modification (1) of Another Embodiment (g)

The supply side flow path S and the discharge side flow path R are arranged in the up-down direction, or the supply side flow path S and the discharge side flow path R are arranged side by side in a lateral direction to form the flow path portion G. The flow path portion G may have a configuration in which a position relationship between the supply side flow path S and the discharge side flow path R is arranged on an inclined line. Further, a cross-sectional shape of a flow path of each of the supply side flow path S and the discharge side flow path R can be freely set corresponding to the configuration of the flow path portion G, such as a rectangle, a polygon, a rhombus, or a combination of a rectangle and a circle.

### Modification (2) of Another Embodiment (g)

The heat exchanger A is implemented such that the first plate 21, the second plate 22, and the third plate 23, each of which is pressed, are arranged so as to overlap each other from below to above, and a plurality of batteries (not shown) are placed on an upper surface of the second plate 22.

The heat exchanger A according to the modification (2) has a configuration in which an up-down relationship is reversed from the configuration shown in Figs. 10 to 13, but since a battery (not shown) is placed on the second plate 22, the upper surface of the second plate 22 is arranged at a position higher than the third plate 23, and the heat exchange flow path Da having the same up-down interval as that of another embodiment (g) is formed between the second plate 22 and the first plate.

In order to implement such a configuration, it is necessary to set at least the shapes of the first plate 21 and the second plate 22 to be different from those of another embodiment (g), but similarly to another embodiment (g), the heat exchanger A can be manufactured by overlapping the first plate 21, the second plate 22, and the third plate 23 and integrating the plates by joining with welding.

In the heat exchanger A according to the modification (2), similarly to another embodiment (g), the first seal portion Q1 and the second seal portion Q2 can be created by forming a protrusion portion by drawing the first plate 21 and the second plate 22.

### Modification (3) of Another Embodiment (g)

The first plate 21, the second plate 22, and the third plate 23, each of which is made of a pressed metal material, are overlapped in the up-down direction Z, and are joined by welding to form the flow path portion G, and a metal plate is used on at least a part of these plates as a separate member to form the heat exchange module 1.

In the modification (3), it is conceivable that the entire heat exchange module 1 is formed in a tubular shape in advance using a plurality of (may be more than two) metal plates, each of which is pressed, as the heat exchange module 1, and the heat exchange module 1 is connected to the flow path portion G by welding. Accordingly, the dimension of the heat exchange module 1 in the longitudinal direction X can be set to any value according to the specification.

Further, in the modification (3), for example, a metal plate thicker than the first plate 21 and the second plate 22 is used as the metal plate forming the heat exchange module 1, so that a strength can be improved. Even in the configuration of the modification (3), a pressure loss is reduced in order to reduce a flow path resistance.

### Modification (4) of Another Embodiment (g)

As partially described in another embodiment (g), the partition wall 22c is formed by pressing at least one of the first plate 21 and the second plate 22. Alternatively, a large number of partition walls 22c may be formed. By using a large number of partition walls 22c in this manner, it is also possible to configure the heat exchange flow path Da such that the coolant F (fluid) flows while being folded back a large number of times in the heat exchange module 1.

In the modification (4), for the coolant F (fluid), the heat exchange flow path Da may be formed such that the coolant F flows in a zigzag manner or the coolant F branches and flows through a plurality of parallel flow paths.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

In the embodiments described above, the following configurations are conceivable.
(1) A heat exchanger A, through which a fluid to be heat-exchanged with a battery B mounted on a vehicle flows, includes: a plurality of heat exchange modules 1 each having a heat exchange flow path Da formed inside by overlapping and joining a plurality of metal plates, a supply port 1f through which the fluid is sent to the heat exchange flow path Da, and a discharge port 1e through which the fluid (coolant F) is sent out from the heat exchange flow path Da; a supply flow path module 2 joined to each of the plurality of heat exchange modules 1 and configured to supply the fluid (coolant F) from the supply port 1f of each of the plurality of heat exchange modules 1; and a discharge flow path module 3 joined to each of the plurality of heat exchange modules 1 and configured to discharge the fluid (coolant F) from the discharge port 1e of each of the plurality of heat exchange modules 1. In at least one of the supply flow path module 2 and the discharge flow path module 3, a flow path through which the fluid flows is formed inside by overlapping and joining a plurality of metal plates.

According to this, in the heat exchanger A, the supply flow path module 2 and the heat exchange module 1 are joined to enable the supply of the fluid (coolant F), and the heat exchange module 1 and the discharge flow path module 3 are joined to enable the discharge of the fluid (coolant F). Therefore, for example, compared to a case where fluid is supplied and discharged using a connector and a pipe, a dimension in an up-down direction can be shortened, a space can be saved, the number of components can be reduced, and an assembly process can be simplified. Further, as the supply flow path module 2 or the discharge flow path module 3, for example, an upper metal plate having an arc-shaped cross section that protrudes upward and a lower metal plate processed to have a circular cross section that protrudes downward can be joined by a technique such as welding to form a channel. In the channel configured by vertically overlapping the metal plates in this manner, for example, it is easy to form a flow path having a flow path cross section compressed in the up-down direction, and a dimension of the entire heat exchanger A in the up-down direction can be shortened.

(2) In the heat exchanger A according to (1), it is preferable that the heat exchange module 1 includes a heat exchange wall (heat exchange upper plate 11) facing the battery B and a bottom wall (heat exchange lower plate 12) facing the heat exchange wall (heat exchange upper plate 11), and the supply flow path module 2 and the discharge flow path module 3 are joined to the bottom wall (heat exchange lower plate 12).

Accordingly, the fluid (coolant F) flowing through the supply flow path module 2 can be supplied to the supply port 1f of the heat exchange module 1 via the bottom wall (heat exchange lower plate 12) of the heat exchange module 1. Similarly, the fluid (coolant F) from the discharge port 1e of the heat exchange module 1 can be discharged to the discharge flow path module 3 via the bottom wall (heat exchange lower plate 12). In this configuration, compared to a configuration in which the supply flow path module 2 and the discharge flow path module 3 are connected to an upper surface of the heat exchange module 1, the entire upper surface of the heat exchange module 1 can be used as a heat exchange surface, and for example, compared to a configuration in which a connector and a pipe are used, the dimension of the entire heat exchanger A in the up-down direction can be shortened.

(3) In one heat exchanger A according to (2), it is preferable that the supply port 1f is arranged at one end portion of the heat exchange module 1, and the discharge port 1e is formed at the other end portion of the heat exchange module 1.

According to this, the fluid (coolant F) flows from one end portion to the other end portion of the heat exchange module 1, and a temperature of the battery B can be efficiently adjusted by effectively using the entire surface of the heat exchange module 1.

(4) In one heat exchanger A according to (3), it is preferable to further include a connection module J which is joined to the supply flow path module 2 and the discharge flow path module 3 and in which a supply flow path and a discharge flow path of the fluid (coolant F) are formed by overlapping and joining a plurality of metal plates.

According to this, it is possible to obtain a configuration in which a relative position relationship between the supply flow path module 2 and the discharge flow path module 3 is maintained while maintaining an independent state of the flow paths of the supply flow path module 2 and the discharge flow path module 3. In this configuration, the number of components can be reduced as compared with a configuration in which the supply flow path module 2 and the discharge flow path module 3 are separately formed.

(5) In one heat exchanger A according to (1), it is preferable that one heat exchange module 1 has a plurality of heat exchange flow paths Da.

According to this, for example, as compared with a configuration in which a single heat exchange flow path Da is formed in the heat exchange module 1, the temperature of the battery B can be uniformly set by setting the entire heat exchange surface to a uniform temperature without creating a large temperature difference on the heat exchange surface of the heat exchange module 1.

### Industrial Applicability

This disclosure can be used for a heat exchanger.

## Claims

1. A heat exchanger (A) through which a fluid to be heat-exchanged with a battery mounted on a vehicle flows, the heat exchanger comprising:
a plurality of heat exchange modules (1) each having a heat exchange flow path formed inside by overlapping and joining a plurality of metal plates, a supply port through which the fluid is sent to the heat exchange flow path, and a discharge port through which the fluid is sent out from the heat exchange flow path;
a supply flow path module (2) joined to each of the plurality of heat exchange modules and configured to supply the fluid from the supply port of each of the plurality of heat exchange modules; and
a discharge flow path module (3) joined to each of the plurality of heat exchange modules and configured to discharge the fluid from the discharge port of each of the plurality of heat exchange modules, wherein
in at least one of the supply flow path module and the discharge flow path module, a flow path through which the fluid flows is formed inside by overlapping and joining a plurality of metal plates.

2. The heat exchanger according to claim 1, wherein
the heat exchange module includes a heat exchange wall facing the battery and a bottom wall facing the heat exchange wall, and
the supply flow path module and the discharge flow path module are joined to the bottom wall.

3. The heat exchanger according to claim 2, wherein
the supply port is arranged at one end portion of the heat exchange module, and the discharge port is formed at the other end portion of the heat exchange module.

4. The heat exchanger according to claim 3, further comprising:
a connection module which is joined to the supply flow path module and the discharge flow path module and in which a supply flow path and a discharge flow path of the fluid are formed by overlapping and joining a plurality of metal plates.

5. The heat exchanger according to claim 1, wherein
one of the heat exchange modules includes a plurality of the heat exchange flow paths.
